# EUROPEAN PATENT APPLICATION

(11) **EP 4 525 458 A1**
(43) Date of publication of application: **19.03.2025**
(21) Application number: 23845611.5
(22) Date of filing: 26.07.2023
(51) Int. Cl.: H04N 21/431

(54) **TASK PROCESSING METHOD AND APPARATUS, DEVICE, AND STORAGE MEDIUM**

(30) Priority: 26.07.2022 CN 202210886410
(71) Applicant: Beijing Zitiao Network Technology Co., Ltd., Beijing 100190 (CN)
(72) Inventor: LIN, Ziyao, Beijing 100028 (CN)
(74) Representative: Dentons UK and Middle East LLP
(86) International application number: PCT/CN2023/109394
(87) International publication number: WO 2024/022403

(57) **Abstract**

Provided are a task processing method and apparatus, a device and a storage medium. The method includes the steps described below: a subscription task processing request associated with a subscription target is acquired, where the subscription target is used for indicating a target at which a subscription user performs a subscription operation on a target object; subscription task display data is determined according to the subscription task processing request associated with the subscription target; and a subscription task image is rendered and generated according to the subscription task display data and the subscription task image is displayed.

## Description

This application claims priority to Chinese patent application No. 202210886410.5 filed with the China National Intellectual Property Administration (CNIPA) on July 26, 2022, the disclosure of which is incorporated herein by reference in its entirety.

### TECHNICAL FIELD

Embodiments of the present disclosure relate to the technical field of subscription task interaction, and in particular, a task processing method and apparatus, a device, and a storage medium.

### BACKGROUND

With the development of Internet technologies, the video live broadcast industry has also developed vigorously. In the video live broadcast, the interaction between a watching user and a host user is particularly important, and when the watching user is interested in the host user, the watching user may follow the host user by subscribing to the host user. However, a current subscription solution cannot satisfy the diversified demands of users, and the user experience is influenced.

### SUMMARY

The present disclosure provides a task processing method and apparatus, a device, and a storage medium to achieve a visual display of a subscription task, improve interaction convenience of a subscription operation, and improve the switching efficiency and time-sensitivity of the subscription task.

In a first aspect, an embodiment of the present disclosure provides a task processing method. The task processing method includes the following: A subscription task processing request associated with a subscription target is acquired; where the subscription target is used for indicating a target at which a subscription user performs a subscription operation on a target object; subscription task display data is determined according to the subscription task processing request associated with the subscription target; a subscription task image is rendered and generated according to the subscription task display data, and the subscription task image is displayed.

In a second aspect, an embodiment of the present disclosure further provides a task processing apparatus. The task processing apparatus includes a processing request acquisition module, a task display data module and a task pattern generation module. The processing request acquisition module is configured to acquire a subscription task processing request associated with a subscription target, where the subscription target is used for indicating a target at which a subscription user performs a subscription operation on a target object. The task display data module is configured to determine subscription task display data according to the subscription task processing request associated with the subscription target. The task pattern generation module is configured to render and generate a subscription task pattern according to the subscription task display data, and display the subscription task pattern.

In a third aspect, an embodiment of the present disclosure further provides an electronic device. The electronic device includes at least one processor and a storage apparatus. The storage apparatus is configured to store at least one program. The at least one program, when executed by the at least one processor, causes the at least one processor to implement the task processing method described in any embodiment of the present disclosure.

In a fourth aspect, an embodiment of the present disclosure further provides a storage medium including a computer-executable instruction. When executed by a computer processor, the computer-executable instruction is configured to perform the task processing method described in any embodiment of the present disclosure.

### BRIEF DESCRIPTION OF DRAWINGS

Throughout the drawings, the same or similar reference numbers refer to the same or similar elements. It should be understood that the drawings are schematic and components and elements are not necessarily drawn to scale.
FIG. 1 is a flowchart of a task processing method provided in an embodiment of the present disclosure;
FIG. 2 is a schematic diagram of a subscription target edit page provided in an embodiment of the present disclosure;
FIG. 3 is a schematic diagram of a subscription target management page provided in an embodiment of the present disclosure;
FIG. 4 is a schematic diagram of a subscription target publishing page provided in an embodiment of the present disclosure;
FIG. 5 is a schematic structural diagram of a task processing apparatus provided in an embodiment of the present disclosure; and
FIG. 6 is a schematic structural diagram of an electronic device provided in an embodiment of the present disclosure.

### DETAILED DESCRIPTION

Embodiments of the present disclosure will be described in more detail below with reference to the accompanying drawings.

It should be understood that the various steps recited in the method embodiments of the present disclosure may be executed in a different order, and/or executed in parallel. Moreover, the method embodiments may include additional steps and/or omit performing the shown steps. The scope of the present disclosure is not limited in this regard.

The term "include" and variations thereof as used herein are open ended, that is, "including, but not limited to". The term "based on" is "based at least in part on." The term "an embodiment" represents "at least one embodiment", the term "another embodiment" represents "at least one other embodiment", and the term "some embodiments" represents "at least some embodiments". Relevant definitions for other terms will be given in the following description.

It is noted that the concepts referred to in this disclosure as "first", "second", etc. are merely used to distinguish different apparatuses, modules, or units and are not intended to limit the order or interdependence of the functions performed by such apparatuses, modules, or units.

It should be noted that the modifications referred to "one" or "multiple" in this disclosure are intended to be illustrative rather than limiting, and those skilled in the art will appreciate that "at least one" should be understood unless the context clearly indicates otherwise.

The names of messages or information interacted between multiple apparatuses in the embodiments of the present disclosure are for illustrative purposes only and are not used to limit the scope of such messages or information.

It should be understood that before using the technical solution disclosed in the embodiments of the present disclosure, users should be informed and authorized as to the type of personal information, scope of use, context of use, etc., to which the present disclosure relates in an appropriate manner in compliance with relevant laws and regulations.

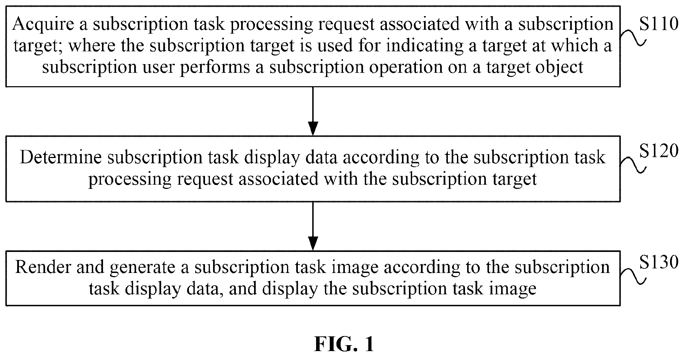

FIG. 1 is a flowchart of a task processing method provided in an embodiment of the present disclosure, the embodiment of the present disclosure is applicable to a situation of subscription interaction in a video presentation under a video presentation scenario, or subscription interaction in an article presentation under an article reading scenario, or subscription interaction in a live broadcast scenario, the method may be performed by a processing apparatus of a task, the apparatus may be implemented in software and/or hardware, in an embodiment, the apparatus may be implemented by an electronic device, and the electronic device may be a mobile terminal, a personal computer (PC) terminal or a server.

As shown in FIG. 1, the method includes the following:

In S110, a subscription task processing request associated with a subscription target is acquired; where the subscription target is used for indicating a target at which a subscription user performs a subscription operation on a target object.

In an embodiment, a subscription task processing request may be generated in response to a subscription operation or unsubscription operation initiated by a subscriber, or in response to a subscription task viewing operation initiated by a subscribed user. Of course, it's not limited to this, the subscription task processing request associated with the subscription target may be a request associated with one or more subscription targets of a subscribed user. For example, a host sets subscription target a for time period A and wishes to achieve this subscription target a during time period A, a viewer subscribes to the host during time period A, a subscription task processing request associated with subscription target a is generated.

In an embodiment, the target object may be a host or a live broadcast room, the subscription may be understood as becoming a member of the host or the live broadcast room, and the subscription operation may be understood as an operation through which a user subscribes to the host or to the live broadcast room and becomes the member of the host or the member of the live broadcast room. For example, a member button may be displayed on a live broadcast video interface of the host, an audience triggers the member button to display a resource transfer interface, and the audience may become a member of the live broadcast room or the host by transferring a preset resource to complete the subscription operation. The corresponding benefits, such as a gift or a service from the host, may be acquired when a user becomes a member of the host or the live broadcast room by subscribing to the host or the live broadcast room.

In this embodiment, the corresponding subscription task image is generated based on the subscription task set by the target object, and the subscription task image is presented on a user interaction interface, so that a visual presentation of the subscription task is implemented, the subscription user is further assisted in performing the subscription operation, and execution progress of the subscription task of a subscribed user is accelerated. The live broadcast scenario is used as an example, the corresponding subscription task image may be generated based on the subscription task, and the subscription task image is presented on a live broadcast interaction interface, so that a user watching the live broadcast is able to complete the subscription operation on the host user directly through the subscription task image, and the execution progress of the subscription task of the host user is accelerated.

In this embodiment, at least one subscription task may be provided, and the at least one subscription task may be displayed in part or in whole on the user interaction interface. When multiple subscription tasks are presented on the user interaction interface, the multiple subscription tasks may be presented based on the subscription targets of these subscription tasks or task timelines of these subscription tasks.

Optionally, the subscription task may be a task actively set by a subscribed party (such as a host) in an application or set based on recommendations of the subscription task processing apparatus, and the subscription task is used for representing a task of a subscribed subscription target desired by the subscribed party. The subscription task processing request may be actively initiated by the subscription party or the subscribed party, or may be triggered by the task processing apparatus based on processing conditions, and is used for processing the subscription task. The method provided in this embodiment may be performed by a user client of the subscription party or performed by a user client of the subscribed party.

The live broadcast scenario is used as an example, the subscription user may be the broadcast-watching user and the target object may be the host user. The method provided in this embodiment may be performed by a client of the host user or by a client of the broadcast-watching user. When the method is performed by the client of the host user, the subscription task processing request may be initiated by the host user and used for processing the subscription task associated with the request, and correspondingly, the processing of the subscription task may include editing the subscription task, such as adding, changing, and checking. When the method is performed by the client of the broadcast-watching user, the subscription task processing request is initiated by the broadcast-watching user and used for executing the subscription task presented on the interaction interface, correspondingly, the processing of the subscription task may be an execution operation on the subscription task, for example, the broadcast-watching user may click the subscription task image displayed on the interaction interface to complete or cancel the subscription operation on the host user to which the subscription task belongs.

It should be understood that the target object is the subscribed party in the subscription operation, for example, the target object may be determined based on an application associated with the method provided in this embodiment. In an embodiment, the application may be a video playing application, an article reading application, a live broadcast application, or the like. When the application is the video playing application, the subscription party may be a user watching a video, and the subscribed party may be a user to which the video belongs; when the application is the article reading application, the subscription party may be a user reading an article, and the subscribed party may be a user to which the article belongs; when the application is the live broadcast application, the subscription party may be a user watching a live broadcast, and the subscribed party (i.e., the target object) may be the live broadcast user. The live broadcast application is used as an example, the subscription target of the subscription task may be a target for reflecting the subscription operation performed on the live broadcast user and by the watching user.

Optionally, the subscription target of the subscription operation may be the target number of subscribed users. Based on this, the subscription target may be used for reflecting the target number of users that have subscribed to the target object, i.e., the number of users performing the subscription operation by the subscription users on the target object. That is, the video presentation scenario is used as an example, the subscription target may be the target number of users subscribing to the currently presented video or the target number of users subscribing to a publisher of the currently presented video; the article reading scenario is used as an example, the subscription target may be the target number of users subscribing to the currently presented article or the target number of users subscribing to a publisher of the currently presented article; and the live broadcast scenario is used as an example, the subscription target may be the target number of users subscribing to a host user or the target number of users subscribing to a certain live broadcast event of the host user.

On the basis of the above technical solutions, the target in the subscription task includes at least one of the following: the number of users performing the subscription operation on the target object within a set time period; where the number of set time periods may be at least one, and the at least one set time period corresponds to at least one subscription task respectively, that is, the set time periods and the subscription tasks are in one-to-one correspondence; and the number of subscription users currently maintaining a subscription state for the target object. That is, the subscription target of the subscription task may be the number of users that have performed the subscription operation on the target object within the set time period or the number of users that maintain the subscription state for the target object. A user who has performed the subscription operation on the target object may be understood as a user who has subscribed to the target object, and whether the subscription is canceled after the subscription does not affect this number. The number of users maintaining the subscription state for the target object may be the number of users that have subscribed to the target object and have not canceled. The live broadcast scenario is used as an example, the host user may set one subscription task according to the subscription target once or may set the subscription targets multiple times based on the time period, and the subscription targets correspond to multiple subscription tasks. For example, the host user may set for one time the target number of users who subscribe to the host user as 10000, i.e., the target in the subscription task is 10000, then the corresponding subscription task has the subscription target of 10000. Multiple target numbers of users may be set as multiple subscription targets based on the time period, for example, the target number of subscribed users before date A is set to 500, and the target number of subscribed users before date B (date B is later than date A) is 2000, then there is a corresponding subscription task with the subscription target of 500 and a corresponding subscription task with the subscription target of 2000.

In this embodiment, multiple subscription tasks are provided, and the multiple subscription tasks correspond to different validity time. The target object may set multiple subscription tasks, for example, multiple subscription targets are set to correspond to multiple subscription tasks in sequence based on the time sequence, and the task durations of different subscription tasks are different. It should be noted that the multiple subscription tasks ordered based on the time sequence may overlap in time and/or may not overlap in time. In an embodiment, the subscription tasks among continuous time points may be set as the subscription tasks without time overlapping, such as a subscription task corresponding to date A to date B (date A is earlier than date B) and a subscription task corresponding to date B to date C (date B is earlier than date C). The subscription tasks with time overlapping may also be set, such as a subscription task corresponding to date A to date B (date A is earlier than date B) and a subscription task corresponding to date A to date C. The subscription tasks with time overlapping and the subscription tasks without time overlapping may also be set simultaneously. On the basis above, at least one subscription task may be processed simultaneously to initiate a subscription task processing request. By supporting the setting of multiple subscription tasks at different time by the target object, the target setting requirements of the target object at long and short term and different time can be satisfied, so that the target object can conveniently and efficiently set the subscription target.

On the basis of the above technical solutions, when the method provided in this embodiment is performed by a client of the subscribed party, the subscription task processing request may be triggered by the subscribed party via an operation on a subscription task processing interface, where the processing of the subscription task may include management, editing and publishing of the subscription task. Based on this, the subscription task processing interface may be a subscription target edit page, a subscription target management page and a subscription target publishing page. The subscription target edit page may handle editing operations on the subscription tasks, such as editing the subscription target of the subscription task; the subscription target management page may handle management operations on the subscription tasks, such as managing at least one subscription task; and the subscription target publishing page may handle publishing operations on the subscription tasks, such as publishing at least one subscription task. The subscription tasks of the target object can be multifaceted and efficiently managed by presenting the subscription target edit page, the subscription target management page, and the subscription target publishing page.

In an embodiment of the present disclosure, before the subscription task processing request associated with the subscription target is acquired, the method further includes presenting a subscription target edit page, where the subscription target edit page includes a target description component and a target number component; correspondingly, the step in which the subscription target processing request is acquired includes the following: in response to an operation performed on the target description component and by the target object, a processing request for target description data of the subscription task is acquired; and/or in response to an operation performed on the target number component and by the target object, a processing request for the target number of the subscription task is acquired. In an embodiment, the subscription task processing apparatus may present the subscription target edit page on the user interaction interface in response to a subscription target edit instruction initiated by the subscribed party. The subscription target edit page may include the target description component and the target number component, the target description component is used for editing a resource allocation operation (such as an operation of distributing a virtual gift) by the subscribed party after the subscription task is completed, and the target number component is used for editing the target number of the subscription task by the subscribed party and using the target number as the subscription target. When the subscribed party needs to edit the subscription task, description information may be edited through the target description component, and/or the target number may be edited through the target number component. The task processing apparatus determines the subscription task processing request based on the description information received by the target description component and/or the number information received by the target number component. The live broadcast application is used as an example, the target number component may be used for editing the target number of the subscription task by a host user to be used as the subscription target, such as the target number of subscription users. When the host user edits the target number, the task processing apparatus acquires a processing request for the target number of the subscription task as the subscription task processing request in response to an operation performed on the target number component and by the user.

Alternatively, the target number may be set by the subscribed party or recommended by the task processing apparatus or the server.

In an embodiment, before the subscription target edit page is presented, the method further includes that at least one to-be-selected target number is determined for the target object based on the subscribed condition of the target object and a set recommendation algorithm to display the at least one to-be-selected target number in the target number component. The set recommendation algorithm may be preset within the client, the client determines the recommended target number as the to-be-selected target number based on the set recommendation algorithm and the current subscription situation of the subscribed party, and when the subscription target edit page is displayed, the to-be-selected target number is displayed in the target number component. The subscribed party may either directly use the to-be-selected target number displayed in the target number component as the edited target number, or may modify the to-be-selected target number displayed in the target number component.

In an embodiment, before the subscription target edit page is presented, the method further includes that at least one to-be-selected target number sent by a service end is acquired and the to-be-selected target number is displayed in the target number component. The set recommendation algorithm may be set in advance within the service end, the service end determines the recommended target number as the to-be-selected target number based on the set recommendation algorithm and the current subscription situation of the subscribed party, and sends the to-be-selected target number to the client. The client displays the to-be-selected target number in the target number component when displaying the subscription target edit page, and the subscribed party may either directly use the to-be-selected target number displayed in the target number component as the edited target number, or may modify the to-be-selected target number displayed in the target number component.

In an embodiment of the present disclosure, before the subscription task processing request associated with the subscription target is acquired, the method further includes presenting a subscription target management page; where the subscription target management page includes an ongoing target management component, an un-started target management component, and/or a newly-added target component. Correspondingly, the step in which the subscription target processing request is acquired includes the following: in response to an operation performed on the ongoing target management component and by the target object, a subscription task processing request associated with the ongoing target management component is acquired; and/or in response to an operation performed on the un-started target management component and by the target object, a subscription task processing request associated with the un-started target management component is acquired; and/or in response to an operation performed on the newly-added target component and by the target object, a processing request for a newly-added subscription task is acquired. In an embodiment, when the subscribed party needs to manage the subscription task, a subscription target management instruction is triggered, the task processing apparatus may present the subscription target management page on the user interaction interface in response to the subscription target management instruction initiated by the subscribed party, the subscribed party may complete the management of corresponding subscription tasks by operating the component on the subscription target management page. In an implementation, the subscription target management page includes an ongoing target management component, an un-started target management component, and/or a newly-added target component. The ongoing target management component is used for presenting the currently ongoing subscription task, the un-started target management component is used for presenting a subscription task that is set but does not start, and the newly-added target component is used for an operation of adding a new subscription task. The subscribed party may manage (delete, etc.) the set subscription tasks through the ongoing target management component and the un-started target management component, and may add a new subscription task through the newly-added target component. The subscribed party may trigger a processing request in response to the processing of the subscription task through the ongoing target management component, the un-started target management component, and/or the newly-added target component. The task processing apparatus determines a management processing request for an ongoing subscription task based on click information of the ongoing target management component; and/or determines a management processing request for an un-started subscription task based on click information of the un-started target management component; and/or determines a processing request for a newly-added subscription task based on click information of the newly-added target component.

In an embodiment of the present disclosure, before the subscription task processing request associated with the subscription target is acquired, the method further includes presenting a subscription target publishing page, where the subscription target publishing page includes a subscription target display component, a target completion video display window, and/or, a subscription user avatar display region. Correspondingly, the step in which the subscription task processing request is acquired includes that in response to a display refresh operation or a target task publishing operation performed on the subscription task and by the target object, a publishing processing request for the subscription task is acquired. In an embodiment, the subscription task processing apparatus may present a subscription target publishing page on the user interaction interface in response to a subscription target publishing instruction initiated by the subscribed party. In an embodiment, the subscription target publishing page includes the subscription target display component, the target completion video display window, and/or, the subscription user avatar display region. The subscription target display component is used for presenting a target of the subscription task, the target completion video display window is used for presenting a video display after the display of the subscription task is completed, and the subscription user avatar display region is used for presenting an avatar set by a subscription party user. After the subscription task is published, the subscribed party may trigger a publishing processing request for the subscription task by triggering a task publishing operation, or trigger a display refresh processing request for the subscription task by triggering a display refresh operation.

In S 120, subscription task display data is determined according to the subscription task processing request associated with the subscription target.

In this embodiment, when the method provided in this embodiment is performed by a client of the subscribed party, the processing on the subscription task may include operations of adding, deleting, changing, checking, and the like. When the method provided in this embodiment is performed by a client of the subscription party, the processing on the subscription task may be an execution operation on the subscription task, such as an operation of subscribing to the target object or canceling the subscription to the target object. The above-described operations all affect the displayed task image. Based on this, the task display data of the subscription task after being processed may be updated according to the subscription task processing request.

To enable an intuitive presentation of the subscription task, the corresponding subscription task display data may be determined based on the task completion progress of the subscription task, thus generating the corresponding subscription task image for presentation. Based on this, upon processing of the subscription task, the corresponding subscription task display data may be determined based on task completion progress data of the processed subscription task, and updating of the subscription task display data may be completed.

It should be understood that the task completion progress of the subscription task may represent the completion progress of the subscription task, such as a completion percentage of the subscription task, or the number of completions of the subscription task, which is not limited here, as long as the completion progress of the subscription task can be represented. Assuming that the target of the subscription task is 200 users and the number of currently subscribed users is 50, then the task progress completion data of the subscription task may be 25% or 50.

The subscription task display data may be rendering data of the subscription task image and used for representing presentation information of the subscription task image. In an implementation, the subscription task image (pattern) may be referenced to a reference image (pattern), and the task completion progress of the subscription task is represented by filling the reference image. The reference image may be a circle, a star, a bar, or the like. A filling percentage of the reference image may be determined through the task completion progress, and the filled reference image is used as updated task display data.

When the method provided in this embodiment is performed by the client of the subscribed party, and a processing operation of the subscription task is a deletion operation, the task display data associated with the subscription task is deleted directly without acquiring the task completion progress data of the subscription task. When the processing of the subscription task is an operation such as adding, changing, or checking, the task completion progress of the subscription task may all be affected, and thus the task completion progress of the subscription task needs to be updated based on the processing operation on the subscription task, and the corresponding task display data is determined based on the task completion progress. The task completion progress may be determined by the client or by the service end. The live broadcast scenario is used as an example, the host user initiates an edit operation on the subscription task, the target of the subscription task is edited, and the task completion progress of this subscription task is directly affected. At this time, the task completion progress may be determined directly by the service end based on the modified target, and the updated task completion progress is sent to the client; or the modified target may be sent by the service end to the client, and the task completion progress is calculated by the client based on the modified target.

When the method provided in this embodiment is performed by the client of the subscription party, both the subscription operation and subscription canceling operation performed by the subscribing party on the subscribed party affect the task completion progress of the corresponding subscription task, thus the task completion progress of the subscription task needs to be updated based on the processing operations on the subscription task, and the corresponding task display data is determined based on the task completion progress. The task completion progress may be determined by the client or by the service end. The live broadcast scenario is used as an example, a broadcast-watching user initiates a subscription operation on the host user, so that the task completion progress of the subscription task is increased, and at this time, the task completion progress may be determined directly by the service end based on the current subscription number of the host user after the broadcast-watching user subscribes to the host user, and the updated task completion progress is sent to the client; alternatively, the current subscription number of the host user after the broadcast-watching user subscribes to the host user may also be sent to the client by the service end, and the task completion progress is calculated by the client based on the current subscription number of the host user.

In an implementation, the step in which the subscription task display data is determined according to the subscription task processing request associated with the subscription target includes the following: Task completion data is requested from a server according to the subscription task processing request, where the task completion data is determined according to the number of subscription users associated with the target object; task completion progress data of the subscription task is determined according to the task completion data; and subscription task display data corresponding to the task completion progress data is determined according to the task completion progress data. Optionally, the server determines the task completion data according to the number of subscription users associated with the target object, and only sends the task completion data to the client, the client determines the task completion progress data based on the task completion data, and the subscription task display data is determined. Calculation of the task completion progress data performed at the client can avoid stuttering of responses resulting from calculation of the completion progress of a large number of users by the server, and the response speed is accelerated.

In an embodiment of the present disclosure, when the subscription task processing request is a task switching request, the step in which the subscription task display data is determined according to the subscription task processing request associated with the subscription target includes the following: Task completion progress data of at least one subscription task is determined according to the task switching request; a display state of a subscription task image of at least one subscription task is adjusted according to the task completion progress data; and subscription task display data corresponding to the adjusted display state is determined according to the adjusted display state of the subscription task image.

Optionally, the subscribed party may set multiple subscription tasks and select part of the subscription tasks for presentation on the user interaction interface. The subscribed party may manually initiate the task switching request, or the task processing apparatus automatically triggers the task switching request. Upon detection of the task switching request by the task processing apparatus, a target switching subscription task associated with the task switching request is acquired, and an updated presentation subscription task is determined based on the target switching subscription task and other subscription tasks currently displayed. Then the display state of the subscription task image is determined based on the updated task progress completion data of the presentation subscription task, and the subscription task image data is adjusted so that the presentation information in the task image corresponding to the adjusted subscription task image data matches the switched subscription task progress.

Optionally, the step in which the subscription task processing request associated with the subscription target is acquired includes the following: A task switching instruction triggered by the target object through a subscription task switching control is received, and the task switching request is generated based on the task switching instruction and is used as the subscription task processing request. The subscribed party may select one or more displayed subscription tasks according to requirements and switch the at least one subscription task to other subscription task, and at this time, the subscribed party may manually trigger the subscription task switching control to initiate the task switching request.

Optionally, the step in which the subscription task processing request associated with the subscription target is acquired includes the following: In response to detecting that a current subscription task displayed on the user interaction interface reaches a task end condition, the task switching request is acquired as the subscription task processing request associated with the subscription target, where the task end condition is that the current subscription task reaches the task end time or that a target of the current subscription task is completed. The task processing apparatus may also detect the subscription task, determine whether the subscription task reaches the task end condition, and upon detecting that the subscription task displayed on the user interaction interface reaches the task completion condition, the task switching request may be automatically triggered. It is determined that the subscription task reaches the task end condition when the subscription task reaches the task end time or the subscription target of the subscription task has been completed.

On the basis of the above-described technical solutions, the step in which the display state of the subscription task image of at least one subscription task is adjusted according to the task completion progress data includes the following: If it is determined according to the task completion progress data that the current subscription task has been completed, a to-be-selected subscription task that has a subscription target closest to the subscription target of the completed subscription task and is in multiple to-be-selected subscription tasks is used as a currently recommended subscription task; and the display state of the subscription task image of the completed subscription task and the display state of the subscription task image of the currently recommended subscription task are adjusted to be a completed state and a recommended state, respectively. In an embodiment, when a recommended subscription task in the presentation subscription tasks has been completed after the subscription task is processed and updated, a subscription task whose subscription target or subscription time closest to the subscription target or subscription time of the completed subscription task is updated as the currently recommended subscription task, and the state of the completed subscription task and the state of the currently recommended subscription task are adjusted. The subscription time is the task time node of the subscription task. The recommended subscription task may be the subscription task at the first presentation position, meanwhile, a recommendation icon may be presented in the presentation region of this subscription task. Automatic recommendation of the subscription task can be realized by the method described above, and the target object is assisted in setting the presented subscription task.

On the basis of the above technical solutions, after the subscription task processing request associated with the subscription target is acquired, the method further includes the following: Target description data of the subscription task is acquired, and subscription task display data corresponding to the target description data is determined according to the target description data; where the target description data includes task description information of the subscription task and a resource distribution operation when the subscription target has been completed, and the task description information is at least one of a task name of the subscription task, a task identifier of the subscription task, a task type of the subscription task, or a task target of the subscription task. The live broadcast scenario is used as an example, when setting the subscription target of the subscription task, the host user may set a feedback operation for completion of the task as the resource distribution operation after the subscription task is completed, meanwhile, at least one of the task name, the task identifier, the task type, and the task target of the subscription task is added as the task description information according to actual demands. If the host user may set "I will sing a song for you if you help me to complete the target" as a feedback operation, "I will sing a song for you" is used as the resource distribution operation when the subscription target has been completed. Based on the subscription target and the task progress data of the subscription task, description information of the resource distribution operation is added to generate task image data, to further generate the subscription task image, such that both task progress and feedback information of the subscription task are presented in the image information of the interaction interface, and the presented information related to the subscription task is richer, which facilitates full understanding of the subscription task by the subscription user, and incentivizes the broadcast-watching user to perform the subscription operation.

In S130, a subscription task image is rendered and generated according to the subscription task display data, and the subscription task image is displayed on the user interaction interface.

After the subscription task display data is obtained, the subscription task display data is rendered to generate the subscription task image, and the subscription task image is sent to the user interaction interface for presentation. The user interaction interface may be an interface of the subscription party and/or an interface of the subscribed party. The live broadcast scenario is used as an example, the user interaction interface may be a live broadcast room interface of a broadcast-watching user, and/or a live broadcast room interface of a host user.

Optionally, the content of the subscription task image includes at least one of the following progress images: a progress bar and a progress bottle. Based on the above embodiments, it can be seen that the task progress of the subscription task may be presented by the progress image. The progress may be displayed by way of the progress bar and/or the progress bottle. The total length of the progress bar may represent the target of the subscription task and the filled length of the progress bar may represent completion data of the subscription task; the total region of the progress bottle may represent the target of the subscription task, and the filling ratio of the progress bottle may represent the completion data of the subscription task.

In an embodiment of the present disclosure, the target object is a host user in a live broadcast room, and a user interaction interface displaying the subscription task image includes a host interaction interface corresponding to the live broadcast room and/or a watching interaction interface corresponding to the live broadcast room. That is, the subscription task image is generated by the subscription task processing request set by the host user in the live broadcast program, and the subscription task image is presented on the host interaction interface at the host user side and/or on the watching interaction interface at the watching user side.

According to the embodiments of the present disclosure, the subscription task processing request associated with the subscription target is acquired, where the subscription target is used for indicating the target at which the subscription user performs the subscription operation on the target object; the subscription task display data is determined according to the subscription task processing request associated with the subscription target; and the subscription task image is rendered and generated according to the subscription task display data, the subscription task image is displayed on the user interaction interface, and the subscription task image corresponding to the subscription task is displayed. In this manner, the diverse requirements of users can be satisfied, the visual presentation of the subscription task is achieved, and the interaction convenience of the subscription operation is improved. Meanwhile, interruption in operation behaviors of the subscription user and the target object due to switching of the subscription task is avoided, the subscription user is assisted in performing the subscription operation on the target object, and the execution progress of the subscription task is accelerated.

On the basis of the above-described embodiments, the subscription task processing method is described by using the live broadcast scenario as an example. In the live broadcast scenario, the application is a live broadcast application, the subscription user is a broadcast-watching user, and the target object is the host user.

The host user may trigger a subscription task processing operation by clicking on a subscription target control. In an embodiment, if the host user sets the subscription task for the first time, the subscription target edit page is displayed upon detecting that the host user clicks on the subscription target control; if the subscription task is set by the host user not for the first time, and an ongoing subscription target exists currently, the subscription target publishing page is displayed upon detecting the host user clicking on the subscription target control; and if the subscription task is set by the host user not for the first time, and an ongoing subscription target does not exist currently, the subscription target management page is displayed upon detecting that the host user clicks on the subscription target control.

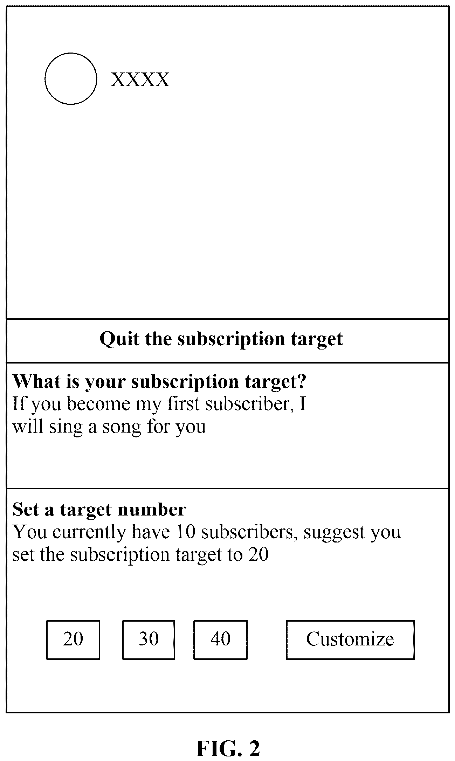

FIG. 2 is a schematic page diagram of a subscription target edit page provided in an embodiment of the present disclosure. As shown in FIG. 2, the target description component and the target number component are included in the subscription target edit page, the target description component includes "What is your subscription target? If you become my first subscription user, I will sing a song for you", "I will sing a song for you" is used as the resource distribution operation after the subscription task is completed; there are multiple target number components, and each target number component displays a to-be-selected target number. A determination manner for the to-be-selected target number may be referred to the above-described embodiments and will not be repeated here.

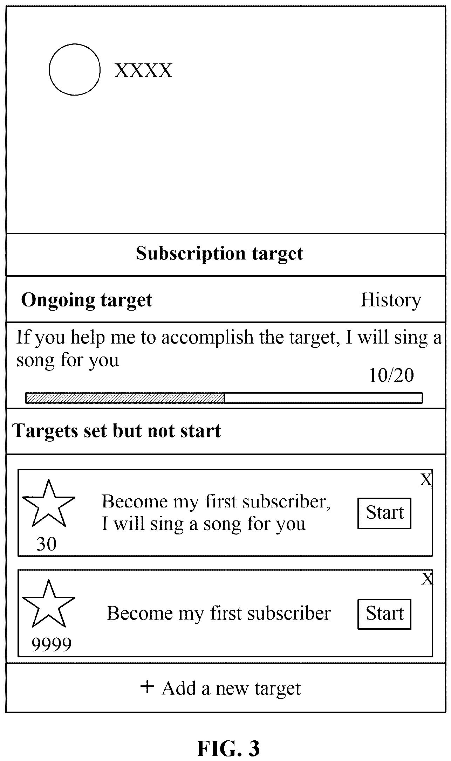

FIG. 3 is a schematic page diagram of a subscription target management page provided in an embodiment of the present disclosure. As shown in FIG. 3, the subscription target management page includes the ongoing target management component, the un-started target management component, and/or the newly-added target component. The ongoing target management component and the un-started target management component both show the subscription target and the description information of the subscription tasks corresponding to the ongoing target management component and the un-started target management component, respectively. The ongoing target management component also displays task completion progress information of the subscription task corresponding to the ongoing target management component. Multiple un-started target management components are provided, and the host user may manage the multiple un-started target management components simultaneously.

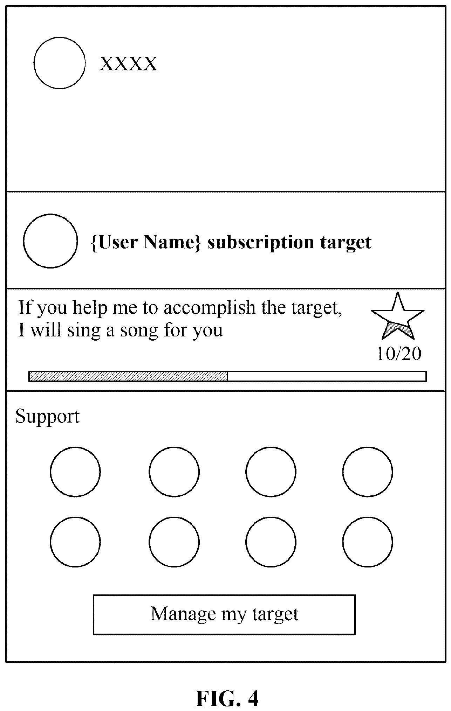

FIG. 4 is a schematic page diagram of a subscription target publishing page provided in an embodiment of the present disclosure. As shown in FIG. 4, the subscription target publishing page includes the subscription target display component, the target completion video display window, and/or the subscription user avatar display region. The subscription target display component displays the subscription target, description information and task completion progress information of the subscription task corresponding to the subscription target display component, the target completion video display window is a video window displaying the subscription task containing the subscription target; and the subscription user avatar display region displays an avatar of a broadcast-watching user that has subscribed to the current host user (the circular region in the figure). The task completion progress information in the subscription target display component is displayed by a filled glass bottle, and a filling percentage of the glass bottle identifies the task completion progress of the subscription task.

According to the technical solutions of the embodiments of the present disclosure, in a live broadcast program, the host user edits and publishes the subscription task, the subscription task processing apparatus displays the subscription task on a host end interface and a watching end interface, so that the visual display of the task progress of the subscription task is achieved, the interaction convenience of the subscription operation is improved, interruption in operation behaviors of the subscription user and the target object due to switching of the subscription task is avoided, and the switching efficiency and time-sensitivity of the subscription task are improved. Meanwhile, a user watching a live broadcast may be assisted in performing the subscription operation, and thus the execution progress of the subscription task is accelerated.

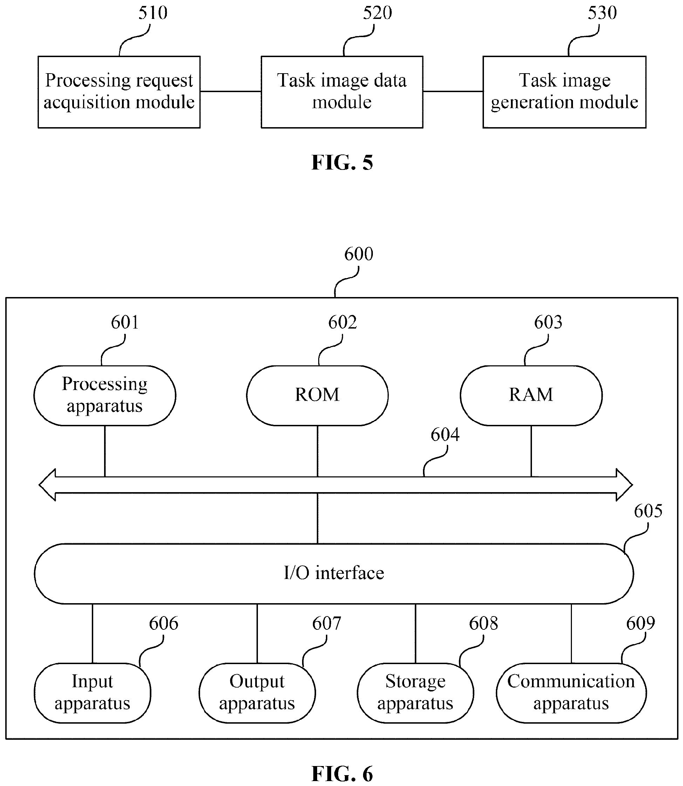

FIG. 5 is a schematic structural diagram of a task processing apparatus provided in an embodiment of the present disclosure. As shown in FIG. 5, the apparatus includes a processing request acquisition module 510, a task display data module 520 and a task image generation module 530.

The processing request acquisition module 510 is configured to acquire a subscription task processing request associated with a subscription target, where the subscription target is used for indicating a target at which a subscription user performs a subscription operation on a target object.

The task display data module 520 is configured to determine subscription task display data according to the subscription task processing request associated with the subscription target.

The task image generation module 530 is configured to render and generate a subscription task image according to the subscription task display data, and display the subscription task image.

According to the embodiments of the present disclosure, the subscription task processing request associated with the subscription target is acquired, where the subscription target is used for indicating the target at which the subscription user performs the subscription operation on the target object; the subscription task display data is determined according to the subscription task processing request associated with the subscription target; and the subscription task image is generated according to the rendering of the subscription task display data, and the subscription task image is displayed, the subscription task image corresponding to the subscription task is displayed on the user interaction interface, so that the user diversification requirement is satisfied, the visual display of the task progress of the subscription task is achieved, and the interaction convenience of the subscription operation is improved. Meanwhile, interruption in operation behaviors of the subscription user and the target object due to switching of the subscription task is avoided, the switching efficiency and time-sensitivity of the subscription task are improved, thus the execution progress of the subscription task is accelerated, and the user experience is improved.

On the basis of any technical solution in the embodiments of the present disclosure, the subscription target may include at least one of the number of subscription users performing the subscription operation on the target object within a set time period, or the number of subscription users currently maintaining a subscription state for the target object; where the number of set time periods may be at least one, and the at least one set time period corresponds to at least one subscription task respectively.

On the basis of any technical solution in the embodiments of the present disclosure, optionally, multiple subscription tasks may be provided, and the multiple subscription tasks correspond to different validity time.

On the basis of any technical solution in the embodiments of the present disclosure, optionally, the subscription task processing request is a task switching request, the task display data module 520 is configured to determine task completion progress data of at least one subscription task among the multiple subscription tasks according to the task switching request; adjust a display state of a subscription task image of each subscription task according to the task completion progress data; and determine subscription task display data corresponding to the adjusted display state according to the adjusted display state of the subscription task image.

On the basis of any technical solution in the embodiments of the present disclosure, optionally, the processing request acquisition module 510 is configured to receive a task switching instruction triggered by the target object through a subscription task switching control, and generate the task switching request as the subscription task processing request based on the task switching instruction.

On the basis of any technical solution in the embodiments of the present disclosure, optionally, the processing request acquisition module 510 is configured to, in response to detecting that a current subscription task reaches a task end condition, acquire the task switching request as the subscription task processing request associated with the subscription target, where the task end condition is that the current subscription task reaches a task end time or that a target of the current subscription task has been completed.

On the basis of any technical solution in the embodiments of the present disclosure, optionally, the task display data module 520 is configured to, in response to determining that a current subscription task is completed according to the task completion progress data, use a to-be-selected subscription task that has a subscription target closest to a subscription target of the completed subscription task and is in multiple to-be-selected subscription tasks as a currently recommended subscription task; and adjust the display state of the subscription task image of the at least one subscription task to be a completed state or a recommended state.

On the basis of any technical solution in the embodiments of the present disclosure, alternatively, the apparatus further includes a description data acquisition module. The description data acquisition module is configured to, after the subscription task processing request associated with the subscription target is acquired, acquire target description data of the subscription task, and determine task display data corresponding to the target description data according to the target description data; where the target description data includes task description information of the subscription task and a resource distribution operation when the subscription target is completed, and the task description information is at least one of a task name of the subscription task, a task identifier of the subscription task, a task type of the subscription task, or a task target of the subscription task.

On the basis of any technical solution in the embodiments of the present disclosure, alternatively, the apparatus further includes an edit page presentation module. The edit page presentation module is configured to, before the subscription task processing request associated with the subscription target is acquired, present a subscription target edit page, where the subscription target edit page includes a target description component and a target number component; correspondingly, the processing request acquisition module 510 is configured to, in response to an operation performed on the target description component and by the target object, acquire a processing request for target description data of the subscription task; and/or in response to an operation performed on the target number component and by the target object, acquire a processing request for a target number of the subscription task.

On the basis of any technical solution in the embodiments of the present disclosure, optionally, the processing request acquisition module 510 is configured to, before presenting the subscription target edit page, acquire at least one to-be-selected target number sent by a service end, and display the at least one to-be-selected target number in the target number component.

On the basis of any technical solution in the embodiments of the present disclosure, alternatively, the apparatus further includes a management page presentation module. The management page presentation module is configured to, before the subscription task processing request associated with the subscription target is acquired, present a subscription target management page, where the subscription target management page includes an ongoing target management component, an un-started target management component, and/or a newly-added target component. Correspondingly, the processing request acquisition module 510 is configured to, in response to an operation performed on the ongoing target management component and by the target object, acquire a subscription task processing request associated with the ongoing target management component; in response to an operation performed on the un-started target management component and by the target object, acquire a subscription task processing request associated with the un-started target management component; and/or in response to an operation performed on the newly-added target component and by the target object, acquire a processing request of a newly-added subscription task.

On the basis of any technical solution in the embodiments of the present disclosure, alternatively, the apparatus further includes a publishing page presentation module, the publishing page presentation module is configured to, before the subscription task processing request associated with the subscription target is acquired, present a subscription target publishing page, where the subscription target publishing page includes a subscription target display component, a target completion video display window, and/or a subscription user avatar display region. Correspondingly, the processing request acquisition module 510 is configured to, in response to a display refresh operation or a target task publishing operation performed on the subscription task and by the target object, acquire a publishing processing request for the subscription task.

On the basis of any technical solution in the embodiments of the present disclosure, optionally, the task display data module 520 is configured to request, from a server, for task completion data according to the subscription task processing request, where the task completion data is determined according to the number of subscription users associated with the target object; determine, according to the task completion data, task completion progress data of the subscription task; and determine, according to the task completion progress data, subscription task display data corresponding to the task completion progress data.

On the basis of any technical solution in the embodiments of the present disclosure, optionally, the target object is a host user in a live broadcast room, and a user interaction interface displaying the subscription task image includes a host interaction interface corresponding to the live broadcast room and/or a watching interaction interface corresponding to the live broadcast room.

The task processing apparatus provided in the embodiments of the present disclosure may perform the task processing method provided in any of the embodiments of the present disclosure and have the corresponding functional modules for executing the method.

It is worth noting that, the multiple units and modules included in the above-described apparatus are only divided according to the function logic and are not limited to the above division, as long as the corresponding functions may be achieved; in addition, the name of each functional unit is also merely to facilitate distinguishing from each other and is not intended to limit the scope of protection of the present application.

FIG. 6 is a schematic structural diagram of an electronic device provided in an embodiment of the present disclosure. Referring below to FIG. 6, there is shown a structural schematic diagram of an electronic device (such as a terminal device or a server in FIG. 6) 600 suitable for implementing the embodiment of the present disclosure. The terminal device in the embodiment of the present disclosure may include, but is not limited to, a mobile terminal such as a mobile phone, a laptop computer, a digital broadcast receiver, a PDA (personal digital assistant), a PAD (Tablet), a PMP (portable multimedia player), and an in-vehicle terminal (such as an in-vehicle navigation terminal), and a fixed terminal such as a digital TV and a desktop computer. The electronic device shown in FIG. 6 is merely an example and should not pose any limitation on the functionality and scope of use of the embodiments of the present disclosure.

As shown in FIG. 6, the electronic device 600 may include a processing apparatus (such as a central processor and a graphics processor) 601, the processing apparatus may perform various appropriate actions and processing according to programs stored in a read-only memory (ROM) 602 or a program loaded from a storage apparatus 608 to a random access memory (RAM) 603. In the RAM 603, various programs and data necessary for operations of the electronic device 600 are also stored. The processing apparatus 601, the ROM 602, and the RAM 603 are connected to each other by a bus 604. An input/output (I/O) interface 605 is also connected to the bus 604.

Typically, the following apparatuses may be connected to the I/O interface 605: an input apparatus 606 including, such as a touchscreen, a touchpad, a keyboard, a mouse, a camera, a microphone, an accelerometer, a gyroscope; an output apparatus 607 including, such as a liquid crystal display (LCD), a speaker, a vibrator; a storage apparatus 608 including, such as a tape, a hard disk; and a communication apparatus 609. The communication apparatus 609 may allow the electronic device 600 to wirelessly or wired communicate with other apparatuses to exchange data. Although FIG. 6 shows an electronic device 600 with various apparatuses, it should be understood that not all of the apparatuses illustrated are required to be implemented or provided. More or fewer apparatuses may alternatively be implemented or provided.

In particular, processes described above with reference to the flowcharts may be implemented as computer software programs according to the embodiments of the present disclosure. For example, an embodiment of the present disclosure includes a computer program product, the computer program product includes a computer program embodied on a non-transitory computer-readable medium, and the computer program contains program codes for performing the methods shown in the flowcharts. In such embodiments, the computer program may be downloaded and installed from a network through the communication apparatus 609, or installed from the storage apparatus 608, or installed from the ROM 602. The computer program, when executed by the processing apparatus 601, performs the above-described functions defined in the methods of the embodiments of the present disclosure.

The names of messages or information interacted between multiple apparatuses in the embodiments of the present disclosure are for illustrative purposes only and are not used to limit the scope of such messages or information.

The electronic device provided in the embodiments of the present disclosure belongs to the same inventive concept as the task processing method provided in the above-described embodiments, and technical details not described in detail in this embodiment may be referred to the above-described embodiments.

An embodiment of the present disclosure provides a computer storage medium, the computer storage medium stores a computer program, and when executed by a processor, the program implements the task processing method provided in the above-described embodiments.

It should be noted that the above-described computer-readable medium of the present disclosure may be a computer-readable signal medium or a computer-readable storage medium or any combination of the two. The computer-readable storage medium may be, for example, but not limited to, an electronic, magnetic, optical, electromagnetic, infrared, or semiconductor system, apparatus, or device, or any combination of the foregoing. More examples of the computer-readable storage medium may include, but are not limited to, an electrical connection having one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device, or any suitable combination of the foregoing. In the present disclosure, the computer-readable storage medium may be any tangible medium that contains or stores a program for use by or in connection with an instruction execution system, apparatus, or device. In this disclosure, the computer-readable signal medium may include a data signal that is contained in a baseband or propagated as a part of a carrier wave, and the data signal carries a computer-readable program code. Such a propagated data signal may take many forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit a program for being used by or in combination with the instruction execution system, apparatus, or device. The program code contained in the computer-readable medium may be transmitted by using any appropriate medium, including but not limited to an electric wire, an optical cable, a radio frequency (RF), etc., or any suitable combination thereof.

**In** some embodiments, the clients and servers may in some embodiments communicate using any currently known or future developed networking protocol, such as hypertext transfer protocol (HTTP), and may be interconnected with any form or medium of digital data communication (such as a communication network). Examples of the communication network include a local area network (LAN), a wide area network (WAN), an inter-network (such as the Internet), and peer-to-peer networks (such as an ad hoc peer-to-peer network), and any currently known or developed in the future.

The above-described computer-readable medium may be included in the above-described electronic device, and it may also be presented alone without being installed into the electronic device.

The above-described computer readable medium carries at least one program, and the at least one program, when executed by the electronic device, causes the electronic device to acquire a subscription task processing request associated with a subscription target; where the subscription target is used for indicating a target at which a subscription user performs a subscription operation on a target object; determine subscription task display data according to the subscription task processing request associated with the subscription target; and render and generate a subscription task image according to the subscription task display data, and display the subscription task image.

A computer program code for performing the operations of the present disclosure may be written in one or more programming languages or combinations thereof, the above-described programming languages include, not limited to, an object-oriented programming language-such as Java, Smalltalk, C++, and further include a conventional procedural programming language-such as a "C" language or similar programming language. The program code may be executed in the following manner: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN) or a wide area network (WAN), or may be connected to an external computer (for example, connected to the external computer through an internet provided by an Internet service provider).

The flowcharts and block diagrams in the drawings illustrate the architecture, functionality, and operation of possible implementations of the system, the method and the computer program product according to various embodiments of the present disclosure. In this regard, each block in the flowchart or block diagram may represent a module, a program segment, or a part of codes, which includes one or more executable instructions for implementing a specified logical function. It should also be noted that, in some alternative implementations, the functions noted in the blocks may occur out of the order noted in the drawings. For example, two blocks shown in succession may, in fact, be executed substantially concurrently, or the two blocks may sometimes be executed in a reverse order, which depends upon the involved functionality. It should also be noted that each block of the block diagram and/or the flowchart, and combinations of blocks of the block diagram and/or the flowchart, may be implemented by a dedicated hardware-based system that performs a specified function or operation, or by a combination of dedicated hardware and a computer instruction.

The units described in the embodiments of the present disclosure may be implemented by software or hardware. The names of the units do not constitute the limitation on the unit itself in some cases.

The functionality described above herein can be performed, at least in part, by one or more hardware logic components. For example, and without limitation, exemplary types of hardware logic components that may be used include field-programmable gate arrays (FPGAs), application-specific integrated circuits (ASICs), application-specific standard products (ASSPs), system-on-chips (SOCs), complex programmable logic devices (CPLDs), and the like.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any appropriate combination of the foregoing.

According to at least one embodiment of the present disclosure, example one provides a task processing method, the method includes the following: A subscription task processing request associated with a subscription target is acquired; where the subscription target is used for indicating a target at which a subscription user performs a subscription operation on a target object; subscription task display data is determined according to the subscription task processing request associated with the subscription target; a subscription task image is rendered and generated according to the subscription task display data, and the subscription task image is displayed.

According to at least one embodiment of the present disclosure, example two provides a task processing method, the subscription target includes at least one of the following: the number of subscription users performing the subscription operation on the target object within a set time period; where one or more set time periods are provided, and the one or more set time periods correspond to one or more subscription tasks, respectively; or the number of subscription users currently maintaining a subscription state for the target object.

According to at least one embodiment of the present disclosure, example three provides a task processing method, multiple subscription tasks are provided, and the multiple subscription tasks correspond to different validity time.

According to at least one embodiment of the present disclosure, example four provides a task processing method, in a case where the subscription task processing request is a task switching request, the step in which the subscription task display data is determined according to the subscription task processing request associated with the subscription target includes the following: Task completion progress data of at least one subscription task is determined according to the task switching request; a display state of a subscription task image of the at least one subscription task is adjusted according to the task completion progress data; and subscription task display data corresponding to the adjusted display state is determined according to the adjusted display state of the subscription task image.

According to at least one embodiment of the present disclosure, example five provides a task processing method, the step in which the subscription task processing request associated with the subscription target is acquired includes the following: A task switching instruction triggered by the target object through a subscription task switching control is received, and the task switching request is generated based on the task switching instruction as the subscription task processing request.

According to at least one embodiment of the present disclosure, example six provides a task processing method, the step in which the subscription task processing request associated with the subscription target is acquired includes the following: In response to detecting that a current subscription task reaches a task end condition, the task switching request is acquired as the subscription task processing request associated with the subscription target, where the task end condition is that the current subscription task reaches a task end time or that a target of the current subscription task is completed.

According to at least one embodiment of the present disclosure, example seven provides a task processing method, the step in which the display state of the subscription task image of the at least one subscription task is adjusted according to the task completion progress data includes the following: In response to determining that a current subscription task is completed according to the task completion progress data, a to-be-selected subscription task that has a subscription target closest to a subscription target of the completed subscription task and is in multiple to-be-selected subscription tasks is used as a currently recommended subscription task; and the display state of the subscription task image of the at least one subscription task is adjusted to be a completed state or a recommended state.

According to at least one embodiment of the present disclosure, example eight provides a task processing method, after the subscription task processing request associated with the subscription target is acquired, the method further includes the following: Target description data of the subscription task is acquired, and subscription task display data corresponding to the target description data is determined according to the target description data; where the target description data includes task description information of the subscription task and a resource distribution operation when the subscription target is completed, and the task description information is at least one of a task name of the subscription task, a task identifier of the subscription task, a task type of the subscription task, or a task target of the subscription task.

According to at least one embodiment of the present disclosure, example nine provides a task processing method, before the subscription task processing request associated with the subscription target is acquired, the method further includes the following: A subscription target edit page is presented, where the subscription target edit page includes a target description component and a target number component; correspondingly, the step in which the subscription task processing request associated with the subscription target is acquired includes the following: In response to an operation performed on the target description component and by the target object, a processing request for target description data of the subscription task is acquired; and/or in response to an operation performed on the target number component and by the target object, a processing request for a target number of the subscription task is acquired.

According to at least one embodiment of the present disclosure, example ten provides a task processing method, before the subscription target edit page is presented, the method further includes the following: At least one to-be-selected target number sent by a service end is acquired, and the at least one to-be-selected target number is displayed in the target number component.

According to at least one embodiment of the present disclosure, example eleven provides a task processing method, before the subscription task processing request associated with the subscription target is acquired, the method further includes the following: A subscription target management page is presented, where the subscription target management page includes an ongoing target management component, an un-started target management component, and/or a newly-added target component; correspondingly, the step in which the subscription task processing request associated with the subscription target is acquired includes the following: In response to an operation performed on the ongoing target management component and by the target object, a subscription task processing request associated with the ongoing target management component is acquired; in response to an operation performed on the un-started target management component and by the target object, a subscription task processing request associated with the un-started target management component is acquired; and/or in response to an operation performed on the newly-added target component and by the target object, a processing request of a newly-added subscription task is acquired.

According to at least one embodiment of the present disclosure, example twelve provides a task processing method, before the subscription task processing request associated with the subscription target is acquired, the method further includes the following: A subscription target publishing page is presented, where the subscription target publishing page includes a subscription target display component, a target completion video display window, and/or a subscription user avatar display region; correspondingly, the step in which the subscription task processing request associated with the subscription target is acquired includes the following: In response to a display refresh operation or a target task publishing operation performed on the subscription task and by the target object, a publishing processing request for the subscription task is acquired.

According to at least one embodiment of the present disclosure, example thirteen provides a task processing method, the step in which the subscription task display data is determined according to the subscription task processing request associated with the subscription target includes the following: Task completion data is requested from a server according to the subscription task processing request, where the task completion data is determined according to the number of subscription users associated with the target object; task completion progress data of the subscription task is determined according to the task completion data; and subscription task display data corresponding to the task completion progress data is determined according to the task completion progress data.

According to at least one embodiment of the present disclosure, example fourteen provides a task processing method, the target object is a host user in a live broadcast room, and a user interaction interface displaying the subscription task image includes a host interaction interface corresponding to the live broadcast room and/or a watching interaction interface corresponding to the live broadcast room.

According to at least one embodiment of the present disclosure, example fifteen provides a task processing apparatus. The task processing apparatus includes a processing request acquisition module, a task display data module and a task image generation module. The processing request acquisition module is configured to acquire a subscription task processing request associated with a subscription target, where the subscription target is used for indicating a target at which a subscription user performs a subscription operation on a target object. The task display data module is configured to determine subscription task display data according to the subscription task processing request associated with the subscription target. The task image generation module is configured to render and generate a subscription task image according to the subscription task display data, and display the subscription task image.

The above description is merely illustrative of the alternative embodiments of the present disclosure and the principles of the technology employed. It should be understood by those skilled in the art that the scope of the disclosure referred to in the present disclosure is not limited to technical solutions resulting from combinations of the above-described technical features, while other technical solutions resulting from any combination of the above-described technical features or equivalent features thereof are also covered without departing from the above-described disclosed concept. For example, the above-described features and the technical features disclosed in the present disclosure (but not limited to) having similar functions are replaced with each other.

Moreover, while operations are depicted in a particular order, this should not be understood as requiring that such operations be performed in the particular order shown or performed in sequential order. In certain circumstances, the multi-tasking and parallel processing may be advantageous. Likewise, while several implementation details are contained in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it should be understood that the subject matter defined in the appended claims is not necessarily limited to the specific features or acts described above. Rather, the specific features and acts described above are merely example forms of implementing the claims.

## Claims

1. A task processing method, comprising:
acquiring a subscription task processing request associated with a subscription target; wherein the subscription target is used for indicating a target at which a subscription user performs a subscription operation on a target object;
determining subscription task display data according to the subscription task processing request associated with the subscription target; and
rendering and generating a subscription task image according to the subscription task display data, and displaying the subscription task image.

2. The method of claim 1, wherein the subscription target comprises at least one of the following:
a number of subscription users performing the subscription operation on the target object within a set time period, wherein at least one set time period is provided, and the at least one set time period corresponds to at least one subscription task, respectively; or
a number of subscription users currently maintaining a subscription state for the target object.

3. The method of claim 1, wherein a plurality of subscription tasks are provided, and the plurality of subscription tasks correspond to different validity time.

4. The method of claim 3, wherein the subscription task processing request is a task switching request, and determining the subscription task display data according to the subscription task processing request associated with the subscription target comprises:
determining, according to the task switching request, task completion progress data of at least one subscription task among the plurality of subscription tasks;
adjusting a display state of a subscription task image of the at least one subscription task according to the task completion progress data; and
determining subscription task display data corresponding to the adjusted display state according to the adjusted display state of the subscription task image.

5. The method of claim 4, wherein acquiring the subscription task processing request associated with the subscription target comprises:
receiving a task switching instruction triggered by the target object through a subscription task switching control, and generating, based on the task switching instruction, the task switching request as the subscription task processing request.

6. The method of claim 4, wherein acquiring the subscription task processing request associated with the subscription target comprises:
in response to detecting that a current subscription task reaches a task end condition, acquiring the task switching request as the subscription task processing request associated with the subscription target, wherein the task end condition is that the current subscription task reaches a task end time or that a target of the current subscription task is completed.

7. The method of claim 4, wherein adjusting the display state of the subscription task image of the at least one subscription task according to the task completion progress data comprises:
in response to determining, according to the task completion progress data, that a current subscription task is completed, using a to-be-selected subscription task that is in a plurality of to-be-selected subscription tasks and has a subscription target closest to a subscription target of the completed subscription task as a currently recommended subscription task; and
adjusting a display state of a subscription task image of the completed subscription task and a display state of a subscription task image of the currently recommended subscription task to be a completed state and a recommended state respectively.

8. The method of claim 1, wherein after acquiring the subscription task processing request associated with the subscription target, the method further comprises:
acquiring target description data of the subscription task, and determining task display data corresponding to the target description data according to the target description data;
wherein the target description data comprises task description information of the subscription task and a resource distribution operation when the subscription target is completed, and the task description information includes at least one of a task name of the subscription task, a task identifier of the subscription task, a task type of the subscription task, or a task target of the subscription task.

9. The method of claim 1, wherein before acquiring the subscription task processing request associated with the subscription target, the method further comprises:
presenting a subscription target edit page, wherein the subscription target edit page comprises a target description component and a target number component;
correspondingly, acquiring the subscription task processing request associated with the subscription target comprises at least one of:
in response to an operation performed on the target description component and by the target object, acquiring a processing request for target description data of the subscription task; or
in response to an operation performed on the target number component and by the target object, acquiring a processing request for a target number of the subscription task.

10. The method of claim 9, wherein before presenting the subscription target edit page, the method further comprises:
acquiring at least one to-be-selected target number sent by a service end, and displaying the at least one to-be-selected target number in the target number component.

11. The method of claim 1, wherein before acquiring the subscription task processing request associated with the subscription target, the method further comprises:
presenting a subscription target management page, wherein the subscription target management page comprises at least one of an ongoing target management component, an un-started target management component, or a newly-added target component;
correspondingly, acquiring the subscription task processing request associated with the subscription target comprises at least one of:
in response to an operation performed on the ongoing target management component and by the target object, acquiring a subscription task processing request associated with the ongoing target management component;
in response to an operation performed on the un-started target management component and by the target object, acquiring a subscription task processing request associated with the un-started target management component; or
in response to an operation performed on the newly-added target component and by the target object, acquiring a processing request of a newly-added subscription task.

12. The method of claim 1, wherein before acquiring the subscription task processing request associated with the subscription target, the method further comprises:
presenting a subscription target publishing page, wherein the subscription target publishing page comprises at least one of a subscription target display component, a target completion video display window, or a subscription user avatar display region;
correspondingly, acquiring the subscription task processing request associated with the subscription target comprises:
in response to a display refresh operation or a target task publishing operation performed on the subscription task and by the target object, acquiring a publishing processing request for the subscription task.

13. The method of claim 1, wherein determining the subscription task display data according to the subscription task processing request associated with the subscription target comprises:
requesting, from a server, for task completion data according to the subscription task processing request, wherein the task completion data is determined according to a number of subscription users associated with the target object;
determining, according to the task completion data, task completion progress data of the subscription task; and
determining, according to the task completion progress data, the subscription task display data corresponding to the task completion progress data.

14. The method of claim 1, wherein the target object is a host user in a live broadcast room, and a user interaction interface displaying the subscription task image comprises at least one of a host interaction interface corresponding to the live broadcast room or a watching interaction interface corresponding to the live broadcast room.

15. A task processing apparatus, comprising:
a processing request acquisition module, which is configured to acquire a subscription task processing request associated with a subscription target, wherein the subscription target is used for indicating a target at which a subscription user performs a subscription operation on a target object;
a task display data module, which is configured to determine subscription task display data according to the subscription task processing request associated with the subscription target; and
a task pattern generation module, which is configured to render and generate a subscription task pattern according to the subscription task display data, and display the subscription task pattern.

16. An electronic device, comprising:
at least one processor; and
a storage apparatus, which is configured to store at least one program;
wherein the at least one program, when executed by the at least one processor, causes the at least one processor to implement the task processing method of any one of claims 1 to 14.

17. A storage medium comprising a computer-executable instruction, wherein the computer-executable instruction is configured to, when executed by a computer processor, perform the task processing method of any one of claims 1 to 14.
